# EUROPÄISCHE PATENTSCHRIFT

(11) **EP 0 886 862 B1**
(45) Veröffentlichungstag und Bekanntmachung des Hinweises auf die Patenterteilung: **04.10.2000**
(21) Anmeldenummer: 96919596.5
(22) Anmeldetag: 22.05.1996
(51) Int. Cl.: G11B 33/04

(54) **CD-VERPACKUNG**
CD PACKAGE
BOITIER POUR DISQUE COMPACT (CD)

(30) Priorität: 23.05.1995 DE 19518850
(43) Veröffentlichungstag der Anmeldung: 30.12.1998
(73) Patentinhaber: Seelenmeyer, Sabine, 24118 Kiel (DE)
(72) Erfinder: Seelenmeyer, Sabine, 24118 Kiel (DE)
(74) Vertreter: Meyer, Ludgerus A., Dipl.-Ing.
(86) Internationale Anmeldenummer: DE9600930
(87) Internationale Veröffentlichungsnummer: WO9637892

(56) Entgegenhaltungen:
- WO-A-93/24931
- GB-A- 2 272 887
- US-A- 4 850 731
- US-A- 5 048 681
- US-A- 5 101 973
- US-A- 5 119 933
- US-A- 5 147 036
- US-A- 5 154 284
- US-A- 5 188 229

## Beschreibung

Die Erfindung betrifft eine aufklappbare CD-Verpackung mit einem die CD lagernden Abschnitt und einem mit diesem Abschnitt verschwenkbaren Deckelabschnitt.

CD-Verpackungen werden im Handel überwiegend in aufwendigen Kunststoffhüllen verkauft. Die aus Recycling-Aspekten her günstigeren Verpackungsstoffe Pappe und Papier werden zur Zeit nicht benutzt, da diese einer besonderen Aufbereitung bedürfen. Außerdem ist es wünschenswert, für die gleichartigen computerlesbaren CD-ROMs Verpackungen zu schaffen, die, wenn sie beispielsweise in Akten, Leitzordner oder auch Bücher und Zeitschriften integriert sind, eine einfache benutzerfreundliche Darbietung der CD's erlauben.

Hierbei soll nach Möglichkeit kein vergleichsweise dicker Kunststoffkasten verwandt werden.

Eine CD-Verpackung aus Karton, jedoch im wesentlichen wie die bekannten Kunststoffverpackungen geformt, ist in der DE 43 20 191 A1 beschrieben. Die Verwendung einer Lasche macht die Entnahme einer CD umständlich.

Weiter ist die US-A-5 147 036 zu nennen, aus der bereits ein Einlegeteil für eine taschenförmige CD-Verpackung bekannt ist, wobei ein Deckelabschnitt um eine in das Einlegeteil eingesteckte CD herumklappbar ist. Das Einlegeteil kann dann zusammen mit der CD in die taschenförmige Verpackung eingeführt werden. Diese Art der Verpackung ist jedoch aufwendig und bedingt mindestens zwei Entnahmeschritte, nämlich einmal die Entnahme aus der taschenförmigen Verpackung und dann nach Aufklappen des Deckabschnitts die Entnahme aus dem Einlegeteil, welches insgesamt für den Benutzer vergleichsweise umständlich ist. Zudem ist das Herstellen zweier getrennter Abschnitte kostenaufwendig.

Die vorliegende Erfindung hat sich daher zur Aufgabe gestellt, eine CD-Verpackung aus möglichst umweltfreundlichem Material mit möglichst geringem Kunststoffanteil und Gewicht herzustellen, die dem Benutzer ein einfaches Entnehmen der CD ermöglicht.

Gelöst wird diese Aufgabe durch die Merkmale des geltenden Hauptanspruchs, insbesondere die Ausrückung zweier Schwenkachsen zueinander, die einen taschenförmigen Abschnitt und einen verschwenkbaren Deckelabschnitt sowie einen Lagerabschnitt miteinander verbinden.

Die Unteransprüche geben vorteilhafte Ausführungsformen der Erfindung wieder.

Insbesondere ist vorteilhaft, daß die CD in einer Tasche ruht, die durch zwei voneinander beabstandete Schwenkachsen eines taschenförmigen Abschnittes der CD-Verpackung und eines die CD lagernden Abschnittes der CD-Verpackung mit einem Deckelabschnitt zur leichten Entnehmbarkeit der CD beiträgt. Eine Schnapphalterung, wie sie von Kunststoffverpackungen allgemein bekannt ist, ist nicht nötig, was die Kosten der Herstellung deutlich senkt und die Entnahme vereinfacht. Eine Pappverpackung ist auch weniger empfindlich gegenüber Bruch und statischer Aufladung. Zudem ist eine Pappverpackung leicht und kann damit Versandkosten sparen.

Zur Lagerung der CD auf dem sie lagernden Abschnitt wird vorgeschlagen, eine Kante am Ende des in die Tasche einzusteckenden Abschnittes vorzusehen, die umgeknickt die CD beim Herausziehen dieses Abschnittes aus der Tasche mitnimmt. Da die CD, wenn sie in der Tasche auf diesem Abschnitt eingeschoben wird, an der freien Kante anstoßen kann, wird vorgeschlagen, eine halbkreisförmige Ausnehmung an dieser Kante vorzusehen, die jedoch eine Minimalbreite der Kante zur Bewirkung des "Mitzieheffektes" ausläßt.

Weiter wird vorgeschlagen, den taschenförmigen Abschnitt mit einer Eingreiföffnung auf die mittige Ausnehmung der CD zugreifend vorzusehen. Die Anordnung eines Fliesstoffes, sowohl auf dem die CD lagernden Abschnitt, als auch an der oberen Innenseite des taschenförmigen Abschnittes, ermöglicht es, evtl. an der CD anhaftende Staubpartikel jeweils abzustreifen, wenn die CD eingesetzt bzw. herausgenommen wird.

Zusätzlich können auf dem die CD lagernden Abschnitt aufgeklebte, der Form der CD entsprechende Randhalter zu seitlichen Lagerung der CD vorgesehen werden (in den Figuren nicht dargestellt).

Vorteilhaft ist insbesondere, daß durch die vorgesehene Konfiguration der Abschnitte der den mechanischen Betätigungen mit der Hand ausgesetzte Deckel der CD-Verpackung durch eine doppelte Papplage gebildet ist, so daß er genauso wie der taschenförmige Abschnitt, in den der die CD lagernde Einsteckabschnitt eingesteckt ist, recht stabil ist. Weiter wird durch die Ausbildung eines maximalen Öffnungswinkels von 180° die Klappkante zwischen dem taschenförmigen Abschnitt und dem Deckelabschnitt vor Überlastungen und Überbiegen geschont.

Durch ausgestanzte Eingreiföffnungen oder Ausstanzungen bzw. Kerben, entsprechend den CD-Umrissen, können die an die CD anliegenden Abschnitte für ihre haltende oder darbietende Funktion noch geeignet hergerichtet werden.

In der nachfolgenden Beschreibung ist ein bevorzugtes Ausführungsbeispiel der Erfindung dargestellt. Dabei zeigen.
- Fig. 1: eine ca. 90° geöffnete CD-Verpackung, bei der die CD zum Teil aus dem taschenförmigen Abschnitt herausgeschoben ist,
- Fig. 2: den Zuschnitt der CD-Verpackung vor ihrem Zusammenlegen,
- Fig. 3: das Zusammenlegen der CD-Verpackung mit bereits aufgelegter CD,
- Fig. 4: die um ca. 180° geöffnete CD-Verpackung,
- Fig. 5: die geschlossene CD-Verpackung, und
- Fig. 6: einen Stanzschnitt für eine CD-Verpackung.

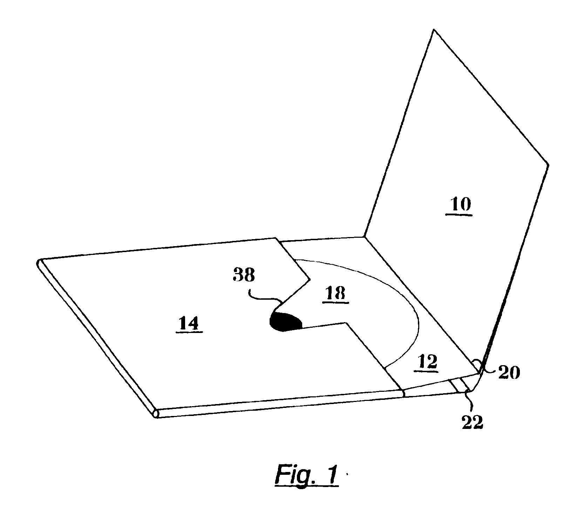

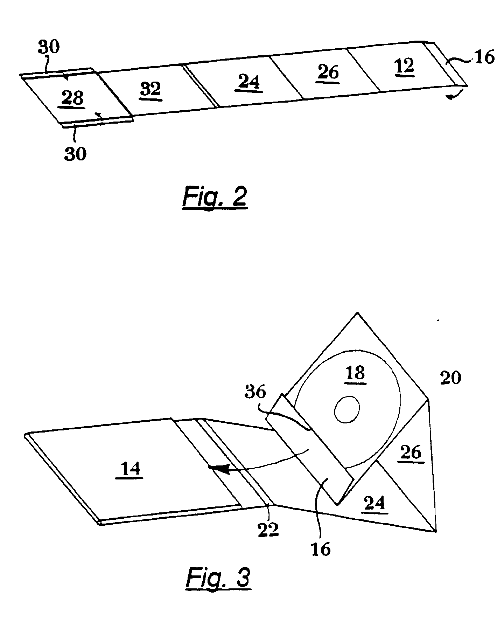

Die in den Figuren 1 und 3 dargestellte CD-Verpackung aus einem Deckelabschnitt 10, einem die CD lagernden Einsteckabschnitt 12, auf dem die CD 18 dargestellt ist und dem taschenförmigen Abschnitt 14 zeigt, wie sich durch den gegenüber dem Abschnitt 24 kürzeren Pappabschnitt 26, also der Innenseite des Deckels 10 gegenüber der Außenseite, die Schwenkkante zwischen dem die CD lagernden Abschnitt 12 und der Innenseite des Deckels und die wenigstens eine Schwenkkante 22 zwischen der Außenseite 32 des taschenförmigen Abschnittes 14 und der Außenseite 24 des Deckels eine Relativbewegung des Einsteckabschnittes 12, der die CD lagert, zu dem taschenförmigen Abschnitt ergibt, wenn der Deckel 10 gegenüber dem taschenförmigen Abschnitt 14 aufgeschwenkt wird. Diese Relativbewegung bewirkt ein Herausschieben der CD zur besseren Darbietung und zur leichteren Entnahme.

Zur Lagerung der CD auf dem Einsteckabschnitt 12 ist vorgesehen, eine an das freie Ende des Einsteckabschnittes 12 angesetzte Kante 16 derart umzulegen, daß diese die CD hält und beim Aufklappen den Deckel 10 aus dem taschenförmigen Abschnitt herauszieht.

Um zu verhindern, daß beim Einsetzen der CD 18 diese an der geraden Kante 36, wie in der Fig. 3 dargestellt, anstößt, bevor sie in ihre endgültige Lage kommt, wird vorgeschlagen, diese Kante 36 entsprechend den Abmessungen der CD teilkreisförmig auszunehmen, so daß gleichzeitig eine gewisse seitliche Stabilisierung der CD erzielt ist. Es ist jedoch auch denkbar, durch zusätzliche Pappabschnitte, die auf den Abschnitt 12 an wenigstens den zwei äußeren durch die CD nicht bedeckten Ecken aufgeklebt werden, eine Halterung der CD vorzunehmen.

Durch weites Aufklappen der Verpackung wird es möglich, die beiden deckelseitigen Lagerungsabschnitte, sofern vorhanden, derart von der CD abzukipppen, daß sie einer geraden Entnahme der CD entlang der Erstreckung der Tasche nicht entgegenstehen. Auch können gestanzte Kerben im Abschnitt 12, der die CD hält, durch die leichte Durchbiegung geöffnet und geschlossen werden. Insbesondere gilt dies für Ausstanzungen entlang der vorgesehenen Lage des Außenumfangs der CD.

Der taschenförmige Abschnitt wird, wie in der Fig. 2 deutlich erkennbar, durch Einschlagen zweier schmaler Randabschnitte 30 auf die Innenseite 28 des taschenförmigen Abschnittes und Umschlagen auf die Seite 32 gebildet. In der Fig. 3 ist der taschenförmige Abschnitt 14 bereits gebildet, wobei gegenüber Fig. 1 hier keine Entnahmeöffnung 38 vorgesehen bzw. dargestellt ist. Sobald die Innenseiten 24, 26 des Deckels miteinander verklebt sind, ist die CD-Verpackung gegen ein Zerlegen geschützt. Falls dies jedoch nicht notwendig oder gewünscht ist, kann die Verpackung auch ohne jegliche Klebung verwendet werden. Vielmehr kann ggf. auch hier Liedtext oder dergleichen auf der Verpackung aufgebracht werden, wozu also deutlich mehr Raum als bisher bereits auf der Verpackung selbst zur Verfügung steht.

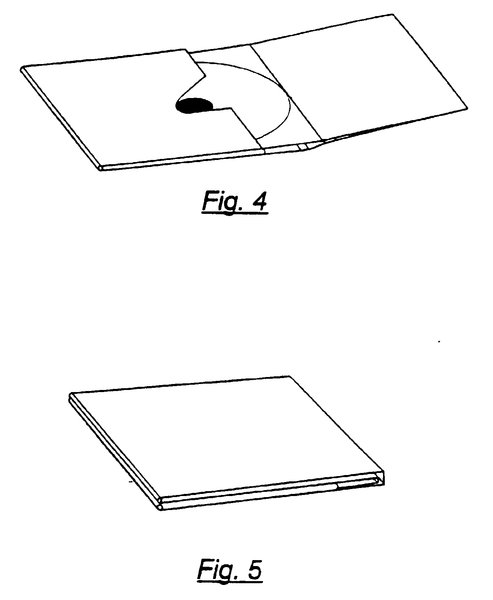

In der Fig. 4 ist die um 180° geöffnete Verpackung zu erkennen, wo im Vergleich zu Fig. 1 auch dargestellt ist, wie die CD nochmals um ein weiteres Stück aus dem taschenförmigen Abschnitt herausbewegbar ist.

In der Fig. 5 ist die geschlossene CD-Verpackung zu erkennen, die, wenn sie entsprechend den DIN-Normen bemaßt wird, wie die bisher bekannten Plastikverpackungen im Handel dargeboten werden kann.

Schließlich ist es möglich, einen Klettverschluß zum leichten Verschließen der Verpackung vorzusehen.

Ggf. kann die Verpackung ergänzend noch in einen Schuber eingeschoben werden. Stattdessen kann auch eine einfache Banderole oder ein Siegel verwendet werden, um dem Käufer die Originalität der CD-Verpackung zusichern zu können.

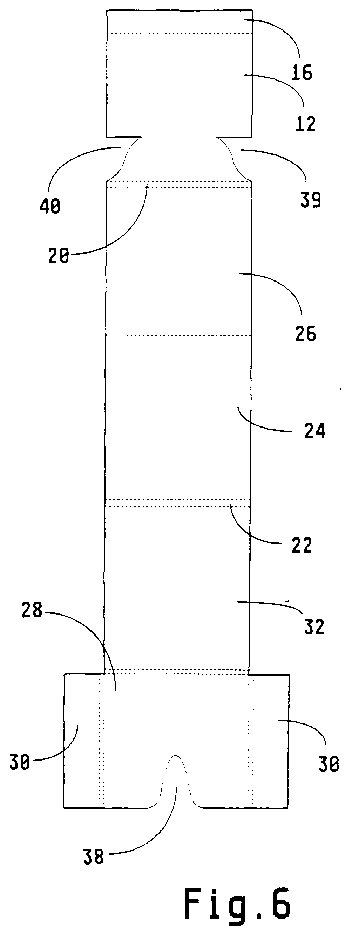

Der in Fig. 6 dargestellte Stanzschnitt einer CD-Verpackung zeigt in einer verbesserten Ausführung noch zwei seitliche Griffausformungen 39, 40, die das Entnehmen einer CD aus der Verpackung erleichtern.

## Patentansprüche

1. Aufklappbare CD-Verpackung mit einem die CD lagernden Abschnitt (12), einem mit diesem lagernden Abschnitt (12) verschwenkbaren Deckelabschnitt (10) und einem taschenförmigen Abschnitt (14), in den der die CD lagernde Abschnitt (12) einsteckbar ist, dadurch gekennzeichnet, daß der Deckelabschnitt (10) mit dem taschenförmigen Abschnitt (14) über eine als Schwenkachse (22) dienende Kante verbunden ist, und daß die Schwenkachse (22) gegenüber einer Schwenkverbindung (20) zwischen dem Deckelabschnitt (10) und dem die CD lagernden Abschnitt (12) ausgerückt ist, um beim Aufklappen der CD-Verpackung durch die resultierende Relativbewegung der Schwenkachsen den die CD lagernden Abschnitt aus dem taschenförmigen Abschnitt (14) zur Darbietung zu einem Teil herauszuziehen.

2. CD-Verpackung nach Anspruch 1, gekennzeichnet durch einen die CD (18) auf dem die CD lagernden Abschnitt (12) beim Herausziehen haltenden, umgeschlagenen Kantenabschnitt (16).

3. CD-Verpackung nach Anspruch 2, gekennzeichnet durch eine teilkreisförmige Ausnehmung an der freien Kante des schmalen Kantenabschnitts (16).

4. CD-Verpackung nach einem der vorhergehenden Ansprüche, gekennzeichnet durch eine Eingreiföffnung (38) auf der Innenseite des taschenförmigen Abschnitts (14).

5. CD-Verpackung nach einem der vorhergehenden Ansprüche, gekennzeichnet durch Bedeckung wenigstens Teile der mit der CD (18) in Kontakt tretenden Oberflächen mit einem Flies.

6. CD-Verpackung nach einem der vorhergehenden Ansprüche, gekennzeichnet durch den CD-Umrissen entsprechende, einem Teil des Gesamtumfanges der CD entsprechende Ausstanzungen in dem die CD lagernden Abschnitt (12) zur seitlichen Lagerung der CD (18) gegen Verrutschen auf diesem Abschnitt (12).

7. CD-Verpackung nach einem der vorhergehenden Ansprüche, dadurch gekennzeichnet, daß der die CD lagernde Abschnitt (12) seitliche Griffausformungen (39, 40) aufweist, um die Entnahme der CD aus der Verpackung zu erleichtern.

## Claims

1. Folding CD case with a section (12) supporting the CD, a lid section (10), pivotal with this supporting section (12), and a section (14) in the form of a pocket, in which the section (12) supporting the CD can be inserted, characterised in that the lid section (10) is connected to the pocket section (14) by means of an edge serving as a pivot axis (22), and that the pivot axis (22) is shifted with respect to a pivotal connection (20) between the lid section (10) and the section (12) supporting the CD in order to partly withdraw the section supporting the CD from the pocket section (14) to display it through the relative movement of the pivot axes resulting when the CD case is unfolded.

2. CD case according to Claim 1, characterised by a folded-over edge section (16) which holds the CD (18) on the section (12) supporting the CD when it is withdrawn.

3. CD case according to Claim 2, characterised by a part-circular recess at the free edge of the narrow edge section (16) .

4. CD case according to any one of the preceding Claims, characterised by an access opening (38) on the inside of the pocket section (14).

5. CD case according to any one of the preceding Claims, characterised by the coverage of at least parts of the surfaces coming into contact with the CD (18) by a nonwoven fabric.

6. CD case according to any one of the preceding Claims, characterised by punched-out portions, which correspond to the CD contours and a part of the overall circumference of the CD, in the section (12) supporting the CD to laterally support the CD (18) against slipping on this section (12).

7. CD case according to any one of the preceding Claims, characterised in that the section (12) supporting the CD comprises lateral handling indentations (39, 40) to facilitate the removal of the CD from the case.

## Revendications

1. Emballage de CD dépliable comportant une section (12) qui reçoit le CD, une section formant couvercle (10) qui est apte à pivoter avec cette section de réception (12), et une section en forme de poche (14) dans laquelle la section de réception de CD (12) peut être introduite, caractérisé en ce que la section formant couvercle (10) est reliée à la section en forme de poche (14) par un bord qui sert d'axe de pivotement (22), et en ce que l'axe de pivotement (22) est décalé par rapport à une liaison de pivotement (20) entre la section formant couvercle (10) et la section de réception de CD (12), afin que lors de l'ouverture de l'emballage de CD, ladite section (12) sorte partiellement de la section en forme de poche (14), pour être présentée, grâce au mouvement relatif résultant qui est décrit par les axes de pivotement.

2. Emballage de CD selon la revendication 1, caractérisé par une section de bordure repliée (16) qui maintient le CD (18) sur la section de réception de CD (12) lorsque celle-ci sort.

3. Emballage de CD selon la revendication 2, caractérisé par un évidement partiellement circulaire sur le bord libre de l'étroite section de bordure (16).

4. Emballage de CD selon l'une des revendications précédentes, caractérisé par une ouverture de contact (38) sur le côté intérieur de la section en forme de poche (14).

5. Emballage de CD selon l'une des revendications précédentes, caractérisé en ce que des parties au moins des surfaces qui sont en contact avec le CD (18) sont recouvertes d'une nappe de fibres.

6. Emballage de CD selon l'une des revendications précédentes, caractérisé en ce qu'il est prévu, dans la section de réception de CD (12), des parties découpées correspondant aux contours du CD et à une partie de la circonférence totale du CD, pour maintenir le CD (18) latéralement et pour l'empêcher de glisser sur ladite section (12).

7. Emballage de CD selon l'une des revendications précédentes, caractérisé en ce que la section de réception de CD (12) comporte des parties découpées latérales de préhension (39, 40) pour permettre de retirer plus facilement le CD de l'emballage.
